# EUROPEAN PATENT APPLICATION

(11) **EP 4 814 711 A1**
(43) Date of publication of application: **30.09.2026**
(21) Application number: 24906082.3
(22) Date of filing: 03.12.2024
(51) Int. Cl.: G06F 9/448

(54) **METHOD AND APPARATUS FOR PROVIDING SERVICE API**

(30) Priority: 22.12.2023 CN 202311795752
(71) Applicant: Huawei Technologies Co., Ltd., Shenzhen, Guangdong 518129 (CN)
(72) Inventor: ZHAO, Xian, Shenzhen, Guangdong 518129 (CN); LI, Xianming, Shenzhen, Guangdong 518129 (CN)
(74) Representative: Pfenning, Meinig & Partner mbB
(86) International application number: PCT/CN2024/136454
(87) International publication number: WO 2025/130598

(57) **Abstract**

This application discloses a service API providing method and an apparatus. The method is applied to a first functional entity. The method includes: receiving a first request from a first API invoker, where the first request includes at least one piece of parameter information that needs to be satisfied by a first service API that the first API invoker requests to invoke; and sending a first notification to the first API invoker, where the first notification indicates that the first service API is invocable, and the first service API is obtained by filling the at least one piece of parameter information into a preset service API generation framework template. In embodiments of this application, the first functional entity may obtain the first service API based on a requirement of the first API invoker, so that no incompatibility arises when the first API invoker invokes the first service API, which improves efficiency of invoking the first service API by the first API invoker.

## Description

### CROSS-REFERENCE TO RELATED APPLICATIONS

This application claims priority to Chinese Patent Application No. 202311795752.7, filed with the China National Intellectual Property Administration on December 22, 2023 and entitled "SERVICE API PROVIDING METHOD AND APPARATUS", which is incorporated herein by reference in its entirety.

### TECHNICAL FIELD

This application relates to the field of communication technologies, and in particular, to a service API providing method and an apparatus.

### BACKGROUND

The 3rd generation partnership project (3rd Generation Partnership Project, 3GPP) defines a plurality of specifications related to a northbound application programming interface (application programming interface, API). To avoid repetition and inconsistency between different API specifications, the 3GPP considers developing a common API framework (common API framework, CAPIF) that has common features applicable to all northbound APIs. Generally, the CAPIF is deployed in an operator network.

Currently, in the CAPIF, an API invoker (API invoker) is usually an operator management system (for example, an operator operations, administration, and maintenance (operations, administration, and maintenance, OAM) system) or an operator application system, and a protocol applicable to the API invoker is compatible with a protocol that is provided by an operator for service API management. The API invoker can discover a service API (service API) through a CAPIF core function (CAPIF core function) entity, and invoke the service API through an API exposing function (API exposing function, AEF) entity.

However, the foregoing invocation procedure does not take into account a case in which the protocol applicable to the API invoker is not compatible with the protocol that is provided by the operator for service API management. For example, if the API invoker is a third-party management system (for example, a third-party OAM system) or a third-party application system, incompatibility may arise when the API invoker invokes the service API. In this case, the API invoker needs to perform service API conversion (for example, conversion of an underlying protocol or an underlying language of the service API) before invoking the service API, which results in low efficiency of invoking the service API by the API invoker.

### SUMMARY

Embodiments of this application provide a service API providing method and an apparatus, to improve efficiency of invoking a service API by an API invoker.

According to a first aspect, an embodiment of this application provides a service API providing method. The method may be applied to a first functional entity or a chip in a first functional entity. For example, the method is applied to the first functional entity. The method includes: The first functional entity may receive a first request from a first API invoker, where the first request includes at least one piece of parameter information that needs to be satisfied by a first service API that the first API invoker requests to invoke; and the first functional entity may send a first notification to the first API invoker, where the first notification indicates that the first service API is invocable, and the first service API is obtained by filling the at least one piece of parameter information into a preset service API generation framework template.

In this embodiment of this application, the first API invoker may send, to the first functional entity, the at least one piece of parameter information that needs to be satisfied by the first service API, and the first functional entity may obtain the first service API based on a requirement of the first API invoker, so that no incompatibility arises when the first API invoker invokes the first service API. This improves efficiency of invoking the first service API by the first API invoker.

In a possible implementation, the first request further includes a first parameter template. The at least one piece of parameter information is carried in the first parameter template. The first parameter template is sent by the first functional entity to the first API invoker.

In this implementation, the first API invoker may sequentially fill the at least one piece of parameter information into the first parameter template and send the first parameter template to the first functional entity, so that the first functional entity can quickly fill, in the preset service API generation framework template, the at least one piece of parameter information into the first parameter template, to obtain the first service API. This improves efficiency of obtaining the first service API by the first functional entity.

In a possible implementation, the first functional entity may further receive a second request from the first API invoker. The second request is used to request the first functional entity to provide the first parameter template, and the second request includes a first template identifier indicating the first parameter template.

In this implementation, the first functional entity may send the first parameter template to the first API invoker only when receiving the second request from the first API invoker, and the first functional entity may quickly determine the first parameter template by using the first template identifier included in the second request. This improves transmission efficiency.

In a possible implementation, the first functional entity may further send a third request to a second functional entity. The second functional entity is configured to store at least one parameter template. The third request is used to request the second functional entity to provide the first parameter template. The third request includes the first template identifier indicating the first parameter template. The first functional entity may further receive the first parameter template from the second functional entity.

In this implementation, a manner in which the first functional entity obtains the first parameter template is provided. For example, the first parameter template is obtained from the second functional entity that stores a plurality of parameter templates. In addition, the second functional entity may quickly determine the first parameter template by using the first template identifier included in the third request, which improves transmission efficiency.

In a possible implementation, the first request further includes one or more of the following: an identifier of the first API invoker, a name of the first service API, time for invoking the first service API, information indicating that a second API invoker other than the first API invoker is allowed to invoke the first service API, and information indicating at least one API invoker that is allowed to invoke the first service API.

In this implementation, the first functional entity may obtain the first service API by using one or more pieces of information included in the first request, which improves efficiency of obtaining the first service API by the first functional entity.

In a possible implementation, the first functional entity may further send a fourth request to the second functional entity. The second functional entity is configured to store the service API generation framework template. The fourth request is used to request the second functional entity to provide the service API generation framework template. The first functional entity may further receive the service API generation framework template from the second functional entity.

In this implementation, a manner in which the first functional entity obtains the service API generation framework template is provided. For example, the service API generation framework template is obtained from the second functional entity that stores the service API generation framework template.

In a possible implementation, the first functional entity may further send a fifth request to a third functional entity. The third functional entity is configured to publish a service API. The fifth request is used to request to publish the first service API, and the fifth request includes information indicating to obtain the first service API.

In this implementation, a manner in which the first functional entity publishes the first service API is provided. For example, the first functional entity may publish the first service API by using the third functional entity, so that the first API invoker can invoke the first service API.

In a possible implementation, the information indicating to obtain the first service API includes one or more of the following: an identifier of the first service API, where the identifier of the first service API is allocated by the first functional entity; and an obtaining path of the first service API.

In this implementation, a plurality of implementations of the information indicating to obtain the first service API are provided. In this way, the first functional entity specifies the information indicating to obtain the first service API more flexibly, and correspondingly, the terminal device obtains the first service API more flexibly.

In a possible implementation, the fifth request further includes one or more of the following: a version of the first service API, the time for invoking the first service API, and information indicating at least one API invoker that is allowed to invoke the first service API.

In this implementation, the third functional entity may determine, based on the time for invoking the first service API, time for publishing the first service API, so that the first API invoker can invoke the first service API at the time at which the first API invoker needs to invoke the first service API. This improves efficiency of invoking the service API by the first API invoker. In addition, the third functional entity may publish, when publishing the first service API, the information about the at least one API invoker that is allowed to invoke the first service API, and determine that the first API invoker has permission to invoke the first service API. This improves efficiency of invoking the service API by the first API invoker.

In a possible implementation, the first notification includes one or more of the following: the name of the first service API, and the identifier of the first service API, where the identifier of the first service API is allocated by the first functional entity.

In this implementation, when receiving the first notification from the first functional entity, the first API invoker may quickly determine, by using the name and/or the identifier of the first service API included in the first notification, that the first notification indicates that the first service API is invocable. This improves transmission efficiency.

In a possible implementation, the first functional entity is deployed in a management domain of a communication system; or the first functional entity is deployed at a location outside the management domain of the communication system, and the first functional entity can communicate with a management functional entity in the management domain.

In this implementation, two deployment manners of the first functional entity are provided. For example, the first functional entity may be deployed in the management domain of the communication system; or the first functional entity is deployed at a location outside the management domain of the communication system, and the first functional entity can communicate with a management functional entity in the management domain.

According to a second aspect, an embodiment of this application further provides a service API providing method. The method may be applied to a first API invoker or a chip of a first API invoker. For example, the method is applied to the first API invoker. The method includes: The first API invoker may send a first request to a first functional entity, where the first request includes at least one piece of parameter information that needs to be satisfied by a first service API that the first API invoker requests to invoke; and the first API invoker may receive a first notification from the first functional entity, where the first notification indicates that the first service API is invocable, and the first service API is obtained by filling the at least one piece of parameter information into a preset service API generation framework template.

In a possible implementation, the first request further includes a first parameter template. The at least one piece of parameter information is carried in the first parameter template. The first parameter template is sent by the first functional entity to the first API invoker.

In a possible implementation, the first API invoker may send a second request to the first functional entity. The second request is used to request the first functional entity to provide the first parameter template, and the second request includes a first template identifier indicating the first parameter template.

In a possible implementation, the first request further includes one or more of the following: an identifier of the first API invoker, a name of the first service API, time for invoking the first service API, information indicating that a second API invoker other than the first API invoker is allowed to invoke the first service API, and information indicating at least one API invoker that is allowed to invoke the first service API.

In a possible implementation, the first notification includes one or more of the following: the name of the first service API, and the identifier of the first service API, where the identifier of the first service API is allocated by the first functional entity.

In a possible implementation, the method further includes: The first API invoker may send a sixth request to a fourth functional entity. The fourth functional entity is configured to expose a service API. The sixth request is used to request to invoke the first service API, and the sixth request includes the identifier of the first API invoker.

For beneficial effects of the second aspect and possible implementations of the second aspect, refer to descriptions of the beneficial effects of the method according to the first aspect and any one of the possible implementations of the first aspect.

According to a third aspect, an embodiment of this application further provides a communication apparatus, including a processor and a memory. The memory is configured to store computer instructions. When the apparatus is run, the processor executes the computer instructions stored in the memory, so that the apparatus performs any one of the implementation methods according to the first aspect or the second aspect. The memory may be a volatile or non-volatile memory, for example, a cache in a semiconductor chip.

According to a fourth aspect, an embodiment of this application further provides a communication apparatus. The apparatus may be a first API invoker, or may be a chip configured for a first API invoker. The apparatus has a function of implementing any one of the implementation methods in the first aspect or the second aspect. The function may be implemented by hardware, or may be implemented by hardware executing corresponding software. The hardware or software includes one or more modules corresponding to the function.

According to a fifth aspect, an embodiment of this application further provides a communication apparatus, including a unit or means (means) configured to perform steps of any one of the implementation methods according to the first aspect or the second aspect.

According to a sixth aspect, an embodiment of this application further provides a communication apparatus, including a processor and an interface circuit. The processor is configured to communicate with another apparatus through the interface circuit, and perform any one of the implementation methods according to the first aspect or the second aspect. There may be one or more processors.

According to a seventh aspect, an embodiment of this application further provides a communication apparatus, including a processor coupled to a memory. The processor is configured to invoke a program stored in the memory, to perform any one of the implementation methods according to the first aspect or the second aspect. The memory may be located inside or outside the apparatus. There may also be one or more processors.

According to an eighth aspect, an embodiment of this application further provides a computer-readable storage medium. The computer-readable storage medium stores instructions, and when the instructions are run on a communication apparatus, any one of the implementation methods in the first aspect or the second aspect is performed.

According to a ninth aspect, an embodiment of this application further provides a computer program product. The computer program product includes a computer program or instructions. When the computer program or the instructions are run by a communication apparatus, any one of the implementation methods in the first aspect or the second aspect is performed.

According to a tenth aspect, an embodiment of this application further provides a chip system, including a processor, configured to perform any one of the implementation methods in the first aspect or the second aspect.

According to an eleventh aspect, an embodiment of this application further provides a communication system. The system includes: a first functional entity, configured to perform any of the implementation methods performed by the first functional entity in the first aspect or the second aspect; and a first API invoker, configured to perform any of the implementation methods performed by the first API invoker in the first aspect or the second aspect.

### BRIEF DESCRIPTION OF DRAWINGS

FIG. 1 is a diagram of a CAPIF network architecture;
FIG. 2 is a schematic flowchart of a service API invoking method;
FIG. 3 is a diagram of a network architecture of a communication system;
FIG. 4 is a diagram of a network architecture of another communication system;
FIG. 5 is a schematic flowchart of a service API providing method;
FIG. 6 is a schematic flowchart of another service API providing method;
FIG. 7 is a diagram of a communication apparatus 700; and
FIG. 8 is a diagram of a communication apparatus 800.

### DESCRIPTION OF EMBODIMENTS

The following clearly and completely describes the technical solutions in embodiments of this application with reference to the accompanying drawings in embodiments of this application.

In embodiments of this application, "when", "as if", and "if" all mean that an apparatus performs corresponding processing in an objective case, are not intended to limit time, do not require the apparatus to necessarily have a determining action during implementation, and do not mean another limitation. Unless otherwise specified, "if" and "in a case of' may be interchangeable, and "when" and "in a case in which" may be interchangeable. "When" and "if"/"in a case of" are interchangeable.

In addition, in embodiments of this application, the word "exemplary" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In this application, "indicating" may include "directly indicating" and "indirectly indicating". For example, when a piece of indication information is described as being used to indicate information I, the indication information may directly indicate I or indirectly indicate I, but it does not necessarily indicate that the indication information carries I.

Information indicated by the indication information is referred to as to-be-indicated information. In a specific implementation process, the to-be-indicated information may be indicated in a plurality of manners, for example, but not limited to, a manner in which the to-be-indicated information, for example, the to-be-indicated information or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected according to a specific requirement. The selected indication manner is not limited in embodiments of this application. In this way, the indication manner in embodiments of this application should be understood as covering various methods that can enable a to-be-indicated party to learn of the to-be-indicated information.

In embodiments of this application, "sending" and "receiving" represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface by another unit or module. "Sending" may also be understood as "outputting" of a chip interface, and "receiving" may also be understood as "inputting" of the chip interface.

In other words, sending and receiving may be performed between devices, for example, between a first API invoker and a first functional entity; or may be performed within a device, for example, sending or receiving may be performed between components, modules, chips, software modules, or hardware modules in a device through a bus, a cable, or an interface.

It may be understood that necessary processing, such as encoding and modulation, may be performed on information between a source end at which the information is sent and the destination end, but the destination end may understand valid information from the source end. Similar descriptions in this application may be understood similarly, and details are not described again.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

Ordinal numerals such as "first" and "second" mentioned in the embodiments of this application are intended to distinguish between a plurality of objects, and are not intended to limit sizes, content, orders, time sequences, priorities, or importance degrees of the plurality of objects. For example, the first request and the second request are two different requests, and do not indicate that different content, priorities, importance, or the like of the two requests. For a type of technical feature, technical features in the type of technical feature are distinguished by using "A", "B", "C", "D", and the like, and there is no sequence or order between the technical features described by "A", "B", "C", and "D".

The following first describes a related technical solution in embodiments of this application.

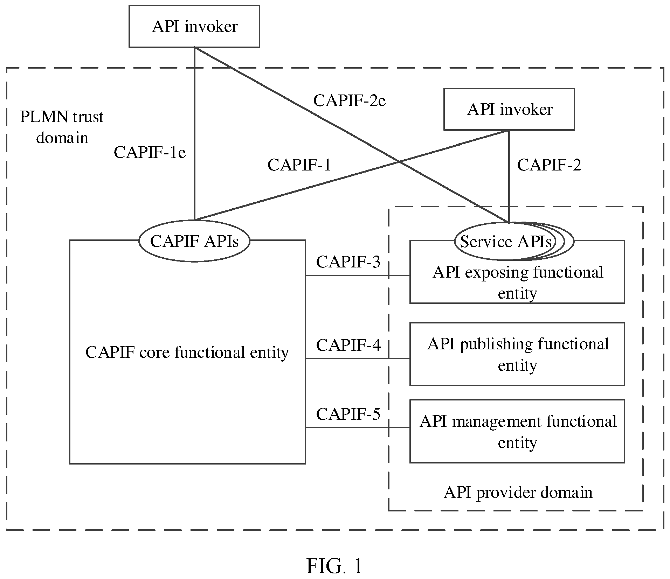

FIG. 1 is a diagram of a CAPIF network architecture. The network architecture shown in FIG. 1 mainly includes the following network elements:
an API invoker, which is usually an operator management system (for example, an operator OAM system) or an operator application system, where a protocol applicable to the API invoker is compatible with a protocol that is provided by an operator for service API management;
service API, which provides a service for the API invoker;
a CAPIF core functional entity, which is a central memory for all policies of the service API, and is also a center for authentication and authorization of the API invoker and the service API;
a CAPIF API, which provides an entry for the API invoker to access the CAPIF core functional entity;
an API exposing functional entity, which is an entry for the service provider to externally expose a service, where the API invoker may use, through the API exposing functional entity, a service provided by the service provider;
an API publishing function (API publishing function, APF) entity, which may publish information about the service API to the CAPIF core functional entity, so that the API invoker can find the information about the service API in the CAPIF core functional entity; and
an API management function (API management function, AMF) entity, which manages the service API, for example, monitoring a status of the service API and recording invocation information.

In FIG. 1, a public land mobile network (public land mobile network, PLMN) trust domain (PLMN trust domain) represents a region trusted by a PLMN. An API provider domain (API provider domain) represents a region in which an API provider is located. A connection relationship between the network elements is as follows: An interface between an API invoker outside the PLMN trust domain and the CAPIF core functional entity is a CAPIF-1e interface, and an interface between the API invoker outside the PLMN trust domain and the API exposing functional entity is a CAPIF-2e interface; an interface between an API invoker in the PLMN trust domain and the CAPIF core functional entity is a CAPIF-1 interface, and an interface between the API invoker in the PLMN trust domain and the API exposing functional entity is a CAPIF-2 interface; and an interface between the CAPIF core functional entity and the API exposing functional entity is a CAPIF-3 interface, an interface between the CAPIF core functional entity and the API publishing functional entity is a CAPIF-4 interface, and an interface between the CAPIF core functional entity and the API management function entity is a CAPIF-5 interface.

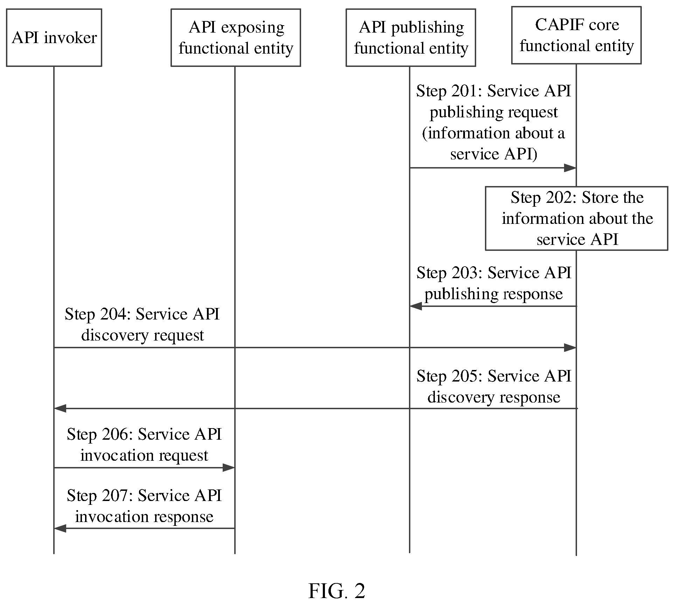

In the network architecture shown in FIG. 1, a procedure shown in FIG. 2 is usually used to invoke a service API. As shown in FIG. 2, a procedure of invoking the service API is as follows.

Step 201: The API publishing functional entity sends a service API publishing request to the CAPIF core functional entity. The request carries information about the service API. The information about the service API may include a name of the service API, a type of the service API, interface information, and the like.

Step 202: The CAPIF core functional entity stores the information about the service API.

Step 203: The CAPIF core functional entity sends a service API publishing response to the API publishing functional entity.

If the CAPIF core functional entity receives the information about the service API and successfully stores the information, the CAPIF core functional entity notifies, by using the service API publishing response, the API publishing functional entity that the information about the service API is successfully published. If the CAPIF core functional entity does not receive the information about the service API or fails to store the information about the service API, the CAPIF core functional entity notifies, by using the service API publishing response, the API publishing functional entity that the information about the service API fails to be published.

Step 204: The API invoker sends a service API discovery request to the CAPIF core functional entity. The request carries a type of the service API, interface information, and the like. The service API discovery request is used to query the information about the service API.

Step 205: The CAPIF core functional entity sends a service API discovery response to the API invoker. The response carries the information about the service API.

Step 206: The API invoker sends a service API invocation request to the API exposing functional entity. The request carries the information about the service API.

Step 207: The API exposing functional entity sends a service API invocation response to the API invoker.

It may be understood that after receiving the service API invocation request from the API invoker, the API exposing functional entity may determine, based on a pre-configured invocation policy or an invocation policy obtained from the CAPIF core functional entity, whether the API invoker has permission to invoke the service API.

The above procedure is a procedure in which the API invoker invokes a service API for a first time. The API invoker needs to first discover information about the service API from the CAPIF core functional entity. After that, when invoking the service API again, the API invoker can directly invoke the service API without using the CAPIF core functional entity.

However, the foregoing invocation procedure does not take into account a case in which the protocol applicable to the API invoker is not compatible with the protocol that is provided by the operator for service API management. For example, if the API invoker is a third-party management system (for example, a third-party OAM system) or a third-party application system, incompatibilitymay arise when the API invoker invokes the service API. In this case, the API invoker needs to perform service API conversion (for example, conversion of an underlying protocol or an underlying language of the service API) before invoking the service API, which results in low efficiency of invoking the service API by the API invoker. Currently, a solution to this problem is not provided in the industry.

In view of this, an embodiment of this application provides a service API providing method. In the method, a first API invoker may send, to a first functional entity, at least one piece of parameter information that needs to be satisfied by a first service API, and the first functional entity may obtain the first service API based on a requirement of the first API invoker, so that no incompatibility arises when the first API invoker invokes the first service API. This improves efficiency of invoking the first service API by the first API invoker.

The method provided in this embodiment of this application may be applied to various communication systems, for example, a long term evolution (long term evolution, LTE) system, an LTE-advanced (LTE-advanced, LTE-A) system, a universal mobile telecommunications system (universal mobile telecommunications system, UMTS), a 4th generation (4th generation, 4G) mobile communication system, a 5th generation (5th generation, 5G) mobile communication system, and a beyond-5G generation (beyond-5G, B5G) mobile communication system, a communication system evolved after 5G, such as a 6th generation (6th generation, 6G) communication system, or the like. Alternatively, the communication system may be a device-to-device (device-to-device, D2D) network, a wireless fidelity (wireless fidelity, Wi-Fi) network, a machine-to-machine (machine-to-machine, M2M) network, an internet of things (internet of things, IoT) network, or another network.

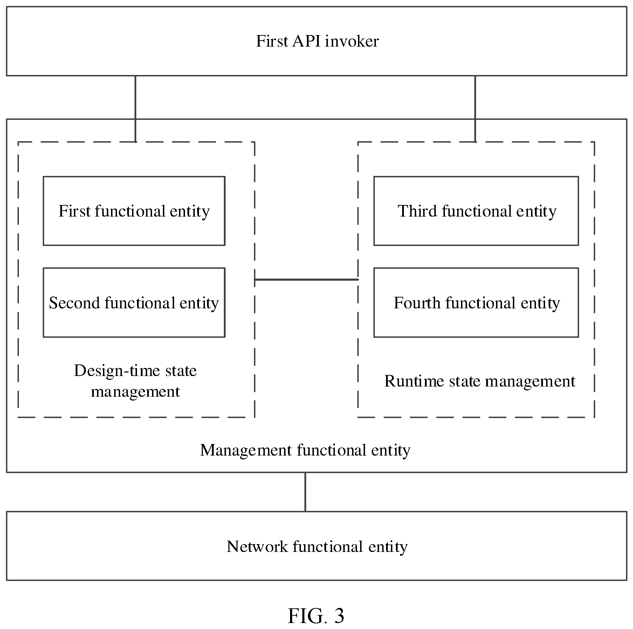

FIG. 3 is a diagram of a network architecture of a communication system. The architecture shown in FIG. 3 mainly includes the following network elements.

A first API invoker, which is also referred to as a first API invoking entity or a first service consumer. The first API invoker may be configured to: implement authentication of the first API invoker by authenticating an identifier of the first API invoker and/or other information, obtain authorization for invoking the service API before invoking the service API, discover the service API, invoke the service API, and the like. The first API invoker may be an operator management system (for example, an operator OAM system) or an operator application system (an M2M application system, an IoT application system, or a vehicle-to-everything (vehicle-to-everything, V2X) application system). A protocol applicable to the API invoker is compatible with a protocol that is provided by an operator for service API management. The operator management system or the operator application system may run on a terminal device or a network device. For example, the first API invoker may be a device in a PLMN network, such as a mobility management entity (mobility management entity, MME), a radio access network (radio access network, RAN) node, or a policy and charging rules function (policy and charging rules function, PCRF) in a 4G mobile communication system, or an access and mobility management function (access and mobility management function, AMF) entity, a session management function (session management function, SMF) entity, a user plane function (user plane function, UPF) entity, a policy control function (policy control function, PCF) entity, or an application function (application function, AF) entity in a 5G mobile communication system. Alternatively, the first API invoker may be a third-party management system (for example, a third-party OAM system) or a third-party application system, where the protocol applicable to the API invoker is not compatible with the protocol that is provided by the operator for service API management. This is not limited in embodiments of this application.

A first functional entity, which is also referred to as an API lifecycle management (lifecycle management, LCM) functional entity, and is configured to manage a lifecycle of the service API. The lifecycle of the service API includes design, development, testing, deployment, update, and retirement.

A second functional entity, which is also referred to as a repository, and is configured to store at least one parameter template and a service API generation framework template. The parameter template is used to design a service API. It may be understood that the parameter template includes at least one parameter used for designing the service API. For example, a parameter template 1 includes a parameter 1, a parameter 2, and a parameter 3. The parameter 1, the parameter 2, and the parameter 3 are parameters used for designing a service API 1. The service API generation framework template is used to develop and test the service API. It may be understood that the service API generation framework template includes the at least one parameter used for designing the service API and at least one parameter of an environment used for developing and testing the service API. The service API can be obtained after a value of the at least one parameter used for designing the service API and a value of the at least one parameter of the environment used for developing and testing the service API are filled in the service API generation framework template. For example, the service API generation framework template includes the parameter 1, the parameter 2, the parameter 3, and a parameter 4. The parameter 1, the parameter 2, and the parameter 3 are parameters used for designing the service API 1, and the parameter 4 is a parameter of an environment used for developing and testing the service API 1.

A third functional entity, which is also referred to as an API publishing functional entity, and is configured to publish the service API. It may be understood that the third functional entity may publish the information about the service API (for example, a name of the service API, a type of the service API, and interface information) to the CAPIF core functional entity, so that the API invoker finds the information about the service API in the CAPIF core functional entity.

A fourth functional entity, which is also referred to as an API exposing functional entity, and is configured to expose the service API. It may be understood that the fourth functional entity is an entry for a service provider to externally expose a service, and the API invoker may use, through the fourth functional entity, a service provided by the service provider.

A management function (management function, MnF) entity, which is a service API provider and is used to provide a service API.

A network function (network function, NF) entity, which is a service provider, and is configured to provide a service.

The first functional entity and the second functional entity may manage a service API in a design-time state. The service API in the design-time state may be understood as a service API that cannot be discovered or invoked by the API invoker. For example, when the service API is in a phase such as design, development, testing, or the like, the service API is in the design-time state. The third functional entity and the fourth functional entity may manage a service API in a runtime state. The service API in the runtime state may be understood as a service API that can be discovered or invoked by the API invoker. For example, when the service API is in a phase such as deployment, update, retirement, or the like, the service API is in the runtime state. A connection relationship between the network elements is as follows: The first functional entity, the second functional entity, the third functional entity, and the fourth functional entity may be deployed in a management functional entity in a management domain of the communication system. Alternatively, the first functional entity, the second functional entity, the third functional entity, and the fourth functional entity are deployed in a management domain of the communication system. It may be understood that the first functional entity, the second functional entity, the third functional entity, and the fourth functional entity each serve as a newly added management functional entity in the management domain of the communication system. In FIG. 3, an example in which the first functional entity, the second functional entity, the third functional entity, and the fourth functional entity are deployed in the management functional entity in the management domain of the communication system is used.

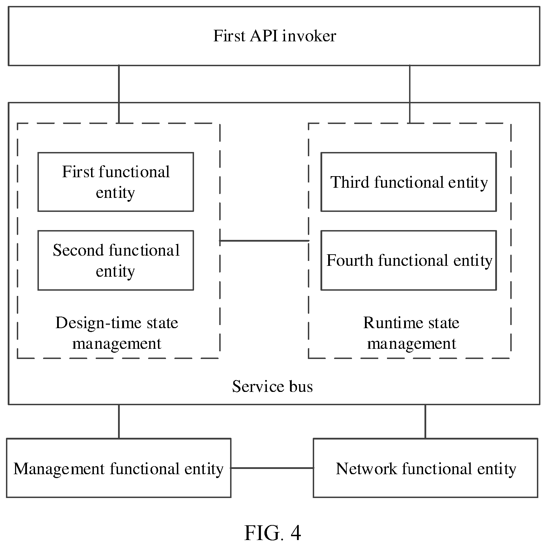

FIG. 4 is a diagram of a network architecture of another communication system. Compared with the system shown in FIG. 3, in FIG. 4, a connection relationship between the network elements is as follows: The first functional entity, the second functional entity, the third functional entity, and the fourth functional entity are deployed at a location outside the management domain of the communication system. The first functional entity, the second functional entity, the third functional entity, and the fourth functional entity can communicate with the management functional entity in the management domain of the communication system (for example, through a service bus). The first functional entity, the second functional entity, the third functional entity, and the fourth functional entity can communicate with the network functional entity in a network domain of the communication system (for example, through a service bus), and the management functional entity in the management domain of the communication system can communicate with the network functional entity in the network domain of the communication system.

It should be understood that names of the network elements are merely examples. This application does not exclude a case in which the network elements have other names and functions of the network elements are combined. With evolution of technologies, any device or network element that can implement the functions of the network elements falls within the protection scope of this application. In addition, during actual application, the communication system may further include another network element. This is not limited in this application.

The foregoing briefly describes a communication system to which embodiments of this application are applicable. The following describes a method provided in an embodiment of this application with reference to the accompanying drawings. Embodiments in this specification may be applied to the communication system shown in FIG. 3 or FIG. 4. For example, a first API invoker in embodiments of this specification may be the first API invoker in FIG. 3 or FIG. 4; a first functional entity in embodiments of this specification may be the first functional entity in FIG. 3 or FIG. 4; a second functional entity in embodiments of this specification may be the second functional entity in FIG. 3 or FIG. 4; a third functional entity in embodiments of this specification may be the third functional entity in FIG. 3 or FIG. 4; a fourth functional entity in embodiments of this specification may be the fourth functional entity in FIG. 3 or FIG. 4; a management functional entity in embodiments of this specification may be the management functional entity in FIG. 3 or FIG. 4; and a network functional entity in embodiments of this specification may be the network functional entity in FIG. 3 or FIG. 4.

In the accompanying drawings corresponding to embodiments of this application, all steps represented by dashed lines are optional steps.

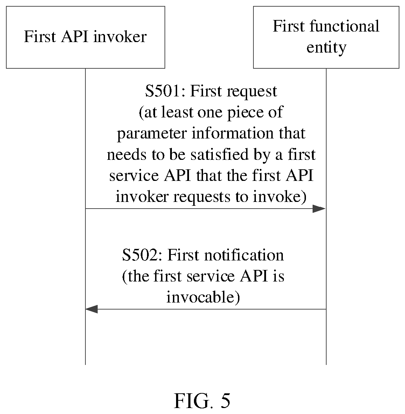

FIG. 5 is a schematic flowchart of a service API providing method. FIG. 5 illustrates the method from a perspective of interaction between a first API invoker and a first functional entity. It should be noted that this embodiment of this application being performed by the first API invoker and the first functional entity is merely an example, and this embodiment of this application is not limited to be performed by the first API invoker and the first functional entity. For example, this embodiment of this application may be alternatively performed by more API invokers. When more API invokers are involved, each API invoker in the more API invokers performs a same procedure. As shown in FIG. 5, a procedure of the service API providing method includes the following steps.

S501: The first API invoker sends a first request to the first functional entity. Correspondingly, the first functional entity receives the first request from the first API invoker.

In this embodiment of this application, the first functional entity may be configured to manage a lifecycle of a service API, for example, design a service API, develop a service API, test a service API, deploy a service API, update a service API, or retire a service API. The first request may include at least one piece of parameter information that needs to be satisfied by a first service API that the first API invoker requests to invoke. The first service API may be a service API of OAM, or may be a service API of another type. This is not limited in embodiments of this application. The at least one piece of parameter information that needs to be satisfied by the first service API may be understood as at least one piece of parameter information used for designing the first service API, that is, a value of at least one parameter used for designing the first service API.

For example, the at least one parameter used for designing the first service API includes a parameter 1, a parameter 2, and a parameter 3. The parameter 1 is a class object of the first service API, which includes at least one attribute; the parameter 2 is an operation for an application object of the first service API; and the parameter 3 is a feature of the first service API. The value of the at least one parameter used for designing the first service API includes a value 1 of the parameter 1, a value 2 of the parameter 2, and a value 3 of the parameter 3. The value 1 indicates that the class object of the first service API is a class object 1 of an attribute 1, an attribute 2, and an attribute 3; the value 2 indicates that the operation for the application object of the first service API is an operation 1 including creation, modification, deletion, and query; and the value 3 indicates that the feature of the first service API is a feature 1, a feature 2, and a feature 3.

In a possible implementation, the first request may further include but is not limited to one or more of the following:
an identifier of the first API invoker; a name of the first service API, which may be a default name, or may be a name set by the first API invoker as needed, and is not specifically limited in this embodiment of this application; time for invoking the first service API, which may be understood as time at which the first service API can be invoked by the API invoker; information indicating that a second API invoker other than the first API invoker is allowed to invoke the first service API; and
information indicating at least one API invoker that is allowed to invoke the first service API. For example, the at least one API invoker that is allowed to invoke the first service API includes the first API invoker and the second API invoker. The information indicating the at least one API invoker that is allowed to invoke the first service API may include the identifier of the first API invoker and an identifier of the second API invoker; or the information indicating the at least one API invoker that is allowed to invoke the first service API may include location information of the first API invoker and location information of the second API invoker. This is not limited in embodiments of this application.

In a possible implementation, the first request may further include a first parameter template. The at least one piece of parameter information that needs to be satisfied by the first service API may be carried in the first parameter template. The first parameter template may include at least one parameter that needs to be satisfied by the first service API or the at least one parameter used for designing the first service API. The first parameter template may be sent by the first functional entity to the first API invoker. It may be understood that the first API invoker may determine, based on the at least one parameter that is included in the first parameter template and that needs to be satisfied by the first service API, a value of the at least one parameter that needs to be satisfied by the first service API. For example, the first parameter template includes a parameter 1, a parameter 2, and a parameter 3, and the first request includes a value 1 of the parameter 1, a value 2 of the parameter 2, and a value 3 of the parameter 3. Alternatively, the first request may not include the first parameter template, and the at least one piece of parameter information that needs to be satisfied by the first service API may not be carried in the first parameter template. This is not limited in embodiments of this application.

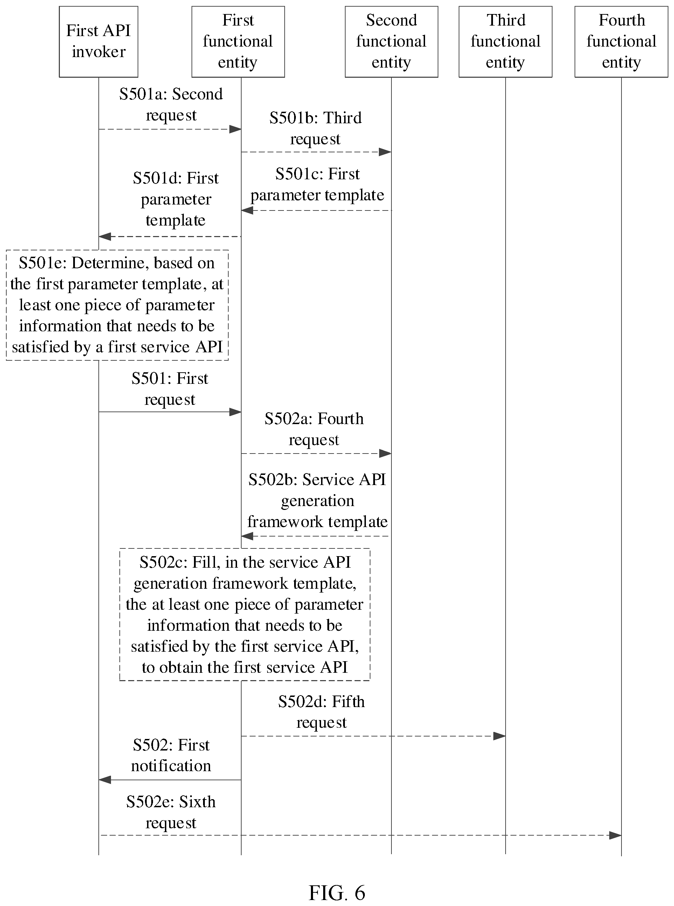

During a specific implementation process, when the at least one piece of parameter information that needs to be satisfied by the first service API is carried in the first parameter template, before S501 is performed in this application, steps shown in FIG. 6 may be further performed.

S501a: The first API invoker sends a second request to the first functional entity. Correspondingly, the first functional entity receives the second request from the first API invoker.

The second request may be used to request the first functional entity to provide the first parameter template, and the second request may include a first template identifier indicating the first parameter template. The first template identifier may be a function type of the first service API, for example, an analysis service API, a configuration service API, a measurement service API, or an energy-saving service API; and/or a design language of the first service API, for example, a representational state transfer (representational state transfer, REST), a network configuration protocol (network configuration protocol, NETCONF), yet another next generation (yet another next generation, YANG), or yet another markup language (yet another markup language, YAML). Optionally, the second request may further include the name of the first service API, so that the first functional entity may determine that the first parameter template is corresponding to the first service API.

S501b: The first functional entity sends a third request to a second functional entity. Correspondingly, the second functional entity receives the third request from the first functional entity.

The second functional entity may be configured to store at least one parameter template. The third request may be used to request the second functional entity to provide the first parameter template. The third request may include the first template identifier indicating the first parameter template.

The second functional entity may store a correspondence between a function type of a service API and/or a design language of the service API and a parameter template shown in Table 1.

**Table 1**

| Function type of a service API | Design language of the service API | Parameter template |
|---|---|---|
| Function type 1 | Design language 1 | Parameter template 1 (parameter a1, parameter a2, and parameter a3) |
| Function type 1 | Design language 2 | Parameter template 2 (parameter b1, parameter b2, and parameter b3) |
| Function type 2 | Design language 1 | Parameter template 3 (parameter c1, parameter c2, and parameter c3) |
| Function type 1 | | Parameter template 4 (parameter d1, parameter d2, and parameter d3) |
| | Design language 1 | Parameter template 5 (parameter e1, parameter e2, and parameter e3) |

As shown in Table 1, different function types of the service API and/or different design languages of the service API correspond to different parameter templates. For example, if the second request includes the function type 1 and the design language 1, the second functional entity may determine that the first parameter template is the parameter template 1 (the parameter a1, the parameter a2, and the parameter a3).

S501c: The second functional entity sends the first parameter template to the first functional entity. Correspondingly, the first functional entity receives the first parameter template from the second functional entity.

S501d: The first functional entity sends the first parameter template to the first API invoker. Correspondingly, the first API invoker receives the first parameter template from the first functional entity.

Optionally, if the second request includes the name of the first service API, the first functional entity may send the first parameter template and the name of the first service API to the first API invoker. Correspondingly, the first API invoker may receive the first parameter template and the name of the first service API from the first functional entity, so that the first API invoker may determine that the first parameter template corresponds to the first service API.

S501e: The first API invoker determines, based on the first parameter template, the at least one piece of parameter information that needs to be satisfied by the first service API.

S502: The first functional entity sends a first notification to the first API invoker. Correspondingly, the first API invoker receives the first notification from the first functional entity.

In this embodiment of this application, the first notification may indicate that the first service API is invocable. The first notification may include but is not limited to one or more of the following: the name of the first service API; or the identifier of the first service API, where the identifier of the first service API is allocated by the first functional entity.

In a specific implementation process, the first notification may indicate that a status of the first service API is updated from a first state to a second state. The first state may indicate that the first service API cannot be invoked by the API invoker. For example, the first state may indicate that the first service API is in a design-time state, or the first state may indicate that the first functional entity is designing the first service API, or the first state may indicate that the first functional entity is developing the first service API, or the first state may indicate that the first functional entity is testing the first service API, or the first state may indicate that the first functional entity has retired the first service API, or the first state may indicate that the first functional entity is updating (or modifying, or upgrading) the first service API. The second state may indicate that the first service API is invocable. For example, the second state may indicate that the first service API is in the runtime state, or the second state may indicate that the first functional entity has deployed the first service API, or the first functional entity has updated (or modified, or upgraded) the first service API.

The first service API may be obtained by the first functional entity by filling, in a preset service API generation framework template, the at least one piece of parameter information (namely, the at least one piece of parameter information for designing the first service API) that needs to be satisfied by the first service API.

In a possible implementation, the service API generation framework template may include the at least one parameter used for designing the service API and the at least one parameter of the environment used for developing and testing the service API. In this case, the first functional entity may obtain the first service API by filling, in the service API generation framework template, the value of the at least one parameter (namely, the value of the at least one parameter used for designing the first service API) that needs to be satisfied by the first service API and the value of the at least one parameter of the environment used for developing and testing the first service API.

During a specific implementation process, before S502 is performed in this application, steps shown in FIG. 6 may be further performed.

S502a: The first functional entity sends a fourth request to the second functional entity. Correspondingly, the second functional entity receives the fourth request from the first functional entity.

The second functional entity is configured to store the service API generation framework template, and the fourth request is used to request the second functional entity to provide the service API generation framework template.

S502b: The second functional entity sends the service API generation framework template to the first functional entity. Correspondingly, the first functional entity receives the service API generation framework template from the second functional entity.

S502c: The first functional entity fills, in the service API generation framework template, the at least one piece of parameter information that needs to be satisfied by the first service API, to obtain the first service API.

S502d: The first functional entity sends a fifth request to a third functional entity. Correspondingly, the third functional entity receives the fifth request from the first functional entity.

The third functional entity may be configured to publish a service API. The fifth request may be used to request to publish the first service API. The first service API can be invoked after being published. The fifth request may include information indicating to obtain the first service API. The information indicating to obtain the first service API may include but is not limited to one or more of the following: the identifier of the first service API, where the identifier of the first service API is allocated by the first functional entity; and an obtaining path of the first service API, for example, a root (root) directory of the first service API.

Optionally, the fifth request may further include but is not limited to one or more of the following: a version of the first service API, the time for invoking the first service API, and the information indicating the at least one API invoker that is allowed to invoke the first service API. For example, when the fifth request includes the version of the first service API, after receiving the fifth request from the first functional entity, the third functional entity may publish the information about the first service API to the CAPIF core functional entity. The information about the first service API may include the version of the first service API, so that the first functional entity can quickly determine the version of the first service API when discovering the first service API by using the CAPIF core functional entity. When the fifth request includes the time for invoking the first service API, after receiving the fifth request from the first functional entity, the third functional entity may determine, based on the time for invoking the first service API included in the fifth request, time for publishing the first service API. In this way, the first API invoker can invoke the first service API at a time at which the first API invoker needs to invoke the first service API. This improves efficiency of discovering or invoking the service API. When the fifth request includes the information indicating the at least one API invoker that is allowed to invoke the first service API, after receiving the fifth request from the first functional entity, the third functional entity may publish the information about the first service API to the CAPIF core functional entity. The information about the first service API may include the information about the at least one API invoker that is allowed to invoke the first service API.

In a possible implementation, in this application, after S502 is performed, a step shown in FIG. 6 may be further performed.

S502e: The first API invoker sends a sixth request to a fourth functional entity. Correspondingly, the fourth functional entity receives the sixth request from the first API invoker.

The fourth functional entity may be configured to expose a service API. The sixth request may be used to request to invoke the first service API. The sixth request may include the identifier of the first API invoker.

During a specific implementation process, after the fourth functional entity receives the sixth request from the first API invoker, the fourth functional entity may determine, based on a preconfigured invocation policy or an invocation policy obtained from the CAPIF core functional entity, whether the first API invoker has permission to invoke the first service API. For example, the fourth functional entity may obtain, from the CAPIF core functional entity, information indicating an identifier of the at least one API invoker that is allowed to invoke the first service API, and determine, based on the identifier of the at least one API invoker that is allowed to invoke the first service API and the identifier of the first API invoker, whether the first API invoker has permission to invoke the first service API. If the identifier of the at least one API invoker that is allowed to invoke the first service API includes the identifier of the first API invoker, the fourth functional entity determines that the first API invoker has permission to invoke the first service API, and the fourth functional entity sends a uniform resource locator (uniform resource locator, URL) of the first service API to the first API invoker. If the identifier of the at least one API invoker that is allowed to invoke the first service API does not include the identifier of the first API invoker, the fourth functional entity determines that the first API invoker has no permission to invoke the first service API, and the fourth functional entity does not send the URL of the first service API to the first API invoker.

According to the foregoing solution, the first API invoker may send, to the first functional entity, the at least one piece of parameter information that needs to be satisfied by the first service API, and the first functional entity may obtain the first service API based on a requirement of the first API invoker, so that no incompatibility arises when the first API invoker invokes the first service API. This improves efficiency of invoking the first service API by the first API invoker.

The method provided in this embodiment of this application is described above with reference to the accompanying drawings. The following describes apparatuses provided in embodiments of this application with reference to the accompanying drawings.

Based on a same technical concept, an embodiment of this application provides a communication apparatus. The apparatus includes modules/units/means configured to perform the method performed by the devices in the foregoing method embodiment. The modules/units/means may be implemented by software, may be implemented by hardware, or may be implemented by hardware executing corresponding software.

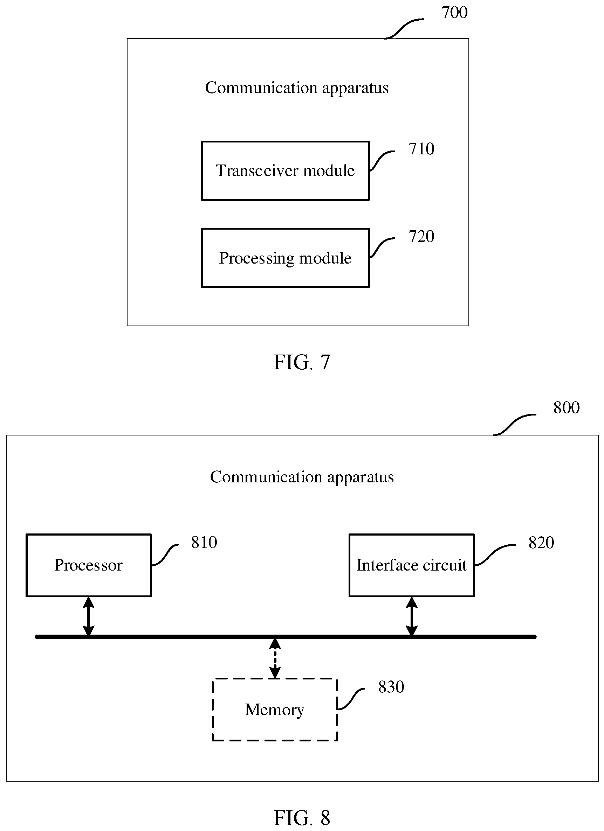

For example, FIG. 7 is a diagram of a communication apparatus 700. The apparatus 700 includes a transceiver module 710 and a processing module 720.

When the apparatus 700 is a first functional entity or is located in a first functional entity, functions of modules of the apparatus 700 are as follows.

The transceiver module 710 is configured to receive a first request from a first API invoker, where the first request includes at least one piece of parameter information that needs to be satisfied by a first service API that the first API invoker requests to invoke. The transceiver module 710 is further configured to send a first notification to the first API invoker, where the first notification indicates that the first service API is invocable, and the first service API is obtained by filling the at least one piece of parameter information into a preset service API generation framework template.

When the apparatus 700 is a first API invoker or is located in a first API invoker, functions of modules of the apparatus 700 are as follows.

The transceiver module 710 is configured to send a first request to a first functional entity, where the first request includes at least one piece of parameter information that needs to be satisfied by a first service API that the first API invoker requests to invoke. The transceiver module 710 is further configured to receive a first notification from the first functional entity, where the first notification indicates that the first service API is invocable, and the first service API is obtained by filling the at least one piece of parameter information into a preset service API generation framework template.

During specific implementation, the apparatus 700 may have a plurality of product forms. The following describes several possible product forms.

FIG. 8 is a diagram of a communication apparatus 800. The communication apparatus 800 includes a processor 810 and an interface circuit 820. The interface circuit 820 is configured to: receive a signal from a communication apparatus other than the communication apparatus, and transmit the signal to the processor 810, or send a signal from the processor 810 to a communication apparatus other than the communication apparatus. The processor 810 is configured to implement, by using a logic circuit or executing instructions, the method performed by the first functional entity or the first API invoker in the foregoing method embodiment.

The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus is a module applied to the first functional entity or the first API invoker, the module implements a function of the first functional entity or the first API invoker in the foregoing method embodiment. The module receives information from the first functional entity or another module (such as a radio frequency module or an antenna) in the first API invoker, where the information is sent by the first functional entity to the first API invoker or sent by the first API invoker to the first functional entity; or the module sends information to the first functional entity or another module (such as a radio frequency module or an antenna) in the first API invoker, where the information is sent by the first API invoker to the first functional entity or sent by the first functional entity to the first API invoker.

It should be understood that the processor mentioned in embodiments of this application may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example instead of limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described herein is intended to include but not limited to these memories and any memory of another appropriate type.

Based on a same technical concept, an embodiment of this application further provides a computer-readable storage medium. The storage medium stores a computer program or instructions. When the computer program or the instructions are executed by a processor, the method performed by the first functional entity or the first API invoker in the foregoing method embodiment is implemented.

Based on a same technical concept, an embodiment of this application further provides a computer program product, including a computer program or instructions. When the computer program or the instructions are executed by a processor, the method performed by the first functional entity or the first API invoker in the foregoing method embodiment is implemented.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A service application programming interface API providing method, applied to a first functional entity, and comprising:
receiving a first request from a first API invoker, wherein the first request comprises at least one piece of parameter information that needs to be satisfied by a first service API that the first API invoker requests to invoke; and
sending a first notification to the first API invoker, wherein the first notification indicates that the first service API is invocable, and the first service API is obtained by filling the at least one piece of parameter information into a preset service API generation framework template.

2. The method according to claim 1, wherein the first request further comprises a first parameter template, the at least one piece of parameter information is carried in the first parameter template, and the first parameter template is sent by the first functional entity to the first API invoker.

3. The method according to claim 2, further comprising:
receiving a second request from the first API invoker, wherein the second request is used to request the first functional entity to provide the first parameter template, and the second request comprises a first template identifier indicating the first parameter template.

4. The method according to claim 2 or 3, further comprising:
sending a third request to a second functional entity, wherein the second functional entity is configured to store at least one parameter template, the third request is used to request the second functional entity to provide the first parameter template, and the third request comprises the first template identifier indicating the first parameter template; and
receiving the first parameter template from the second functional entity.

5. The method according to any one of claims 1 to 4, wherein the first request further comprises one or more of the following:
an identifier of the first API invoker;
a name of the first service API;
time for invoking the first service API;
information indicating that a second API invoker other than the first API invoker is allowed to invoke the first service API; and
information indicating at least one API invoker that is allowed to invoke the first service API.

6. The method according to any one of claims 1 to 5, further comprising:
sending a fourth request to the second functional entity, wherein the second functional entity is configured to store the service API generation framework template, and the fourth request is used to request the second functional entity to provide the service API generation framework template; and
receiving the service API generation framework template from the second functional entity.

7. The method according to any one of claims 1 to 6, further comprising:
sending a fifth request to a third functional entity, wherein the third functional entity is configured to publish a service API, the fifth request is used to request to publish the first service API, and the fifth request comprises information indicating to obtain the first service API.

8. The method according to claim 7, wherein the information indicating to obtain the first service API comprises one or more of the following:
an identifier of the first service API, wherein the identifier of the first service API is allocated by the first functional entity; and
an obtaining path of the first service API.

9. The method according to claim 7 or 8, wherein the fifth request further comprises one or more of the following:
a version of the first service API;
the time for invoking the first service API; and
the information indicating the at least one API invoker that is allowed to invoke the first service API.

10. The method according to any one of claims 1 to 9, wherein the first notification comprises one or more of the following:
the name of the first service API; and
the identifier of the first service API, wherein the identifier of the first service API is allocated by the first functional entity.

11. The method according to any one of claims 1 to 10, wherein the first functional entity is deployed in a management domain of a communication system; or
the first functional entity is deployed at a location outside the management domain of the communication system, and the first functional entity is capable of communicating with a management functional entity in the management domain.

12. A service API providing method, applied to a first API invoker, and comprising:
sending a first request to a first functional entity, wherein the first request comprises at least one piece of parameter information that needs to be satisfied by a first service API that the first API invoker requests to invoke; and
receiving a first notification from the first functional entity, wherein the first notification indicates that the first service API is invocable, and the first service API is obtained by filling the at least one piece of parameter information into a preset service API generation framework template.

13. The method according to claim 12, wherein the first request further comprises a first parameter template, the at least one piece of parameter information is carried in the first parameter template, and the first parameter template is sent by the first functional entity to the first API invoker.

14. The method according to claim 13, further comprising:
sending a second request to the first functional entity, wherein the second request is used to request the first functional entity to provide the first parameter template, and the second request comprises a first template identifier indicating the first parameter template.

15. The method according to any one of claims 12 to 14, wherein the first request further comprises one or more of the following:
an identifier of the first API invoker;
a name of the first service API;
time for invoking the first service API;
information indicating that a second API invoker other than the first API invoker is allowed to invoke the first service API; and
information indicating at least one API invoker that is allowed to invoke the first service API.

16. The method according to any one of claims 12 to 15, wherein the first notification comprises one or more of the following:
the name of the first service API; and
an identifier of the first service API, wherein the identifier of the first service API is allocated by the first functional entity.

17. The method according to any one of claims 12 to 16, further comprising:
sending a sixth request to a fourth functional entity, wherein the fourth functional entity is configured to expose a service API, the sixth request is used to request to invoke the first service API, and the sixth request comprises the identifier of the first API invoker.

18. A communication apparatus, comprising a module configured to perform the method according to any one of claims 1 to 11 or a module configured to perform the method according to any one of claims 12 to 17.

19. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to, by using a logic circuit or by executing code instructions, perform the method according to any one of claims 1 to 11, or perform the method according to any one of claims 12 to 17.

20. A communication apparatus, comprising:
a memory, configured to store a computer program; and
a processor, configured to invoke the computer program from the memory, and run the computer program, to implement the method according to any one of claims 1 to 11, or implement the method according to any one of claims 12 to 17.

21. A chip system, comprising a processor, wherein the processor is configured to perform the method according to any one of claims 1 to 11, or perform the method according to any one of claims 12 to 17.

22. A computer program product, comprising a computer program, wherein when the computer program is run by a communication apparatus, the method according to any one of claims 1 to 17 is implemented.

23. A computer-readable storage medium, wherein the storage medium stores a computer program or instructions, and when the computer program or the instructions are executed by a communication apparatus, the method according to any one of claims 1 to 17 is implemented.
